Europäisches Patentamt

European Patent Office

Office européen des brevets

(11) Veröffentlichungsnummer: **0 361 126**

**A1**

## (12) EUROPÄISCHE PATENTANMELDUNG

(21) Anmeldenummer: **89116182.0**

(22) Anmeldetag: **01.09.89**

(51) Int. Cl.5 **B27B 5/06**

(30) Priorität: **10.09.88 DE 3830857**

(43) Veröffentlichungstag der Anmeldung:
**04.04.90 Patentblatt 90/14**

(84) Benannte Vertragsstaaten:
**AT BE CH DE ES FR GB IT LI NL SE**

(71) Anmelder: **Jenkner, Erwin**
**Lindenstrasse 13**
**D-7261 Gechingen-Bergwald(DE)**

(72) Erfinder: **Jenkner, Erwin**
**Lindenstrasse 13**
**D-7261 Gechingen-Bergwald(DE)**

(74) Vertreter: **Becker, Maria, Dipl.-Phys.**
**Auf dem Haigst 29**
**D-7000 Stuttgart 70(DE)**

(54) **Plattenaufteilsäge.**

(57) Programmgesteuert aufzuteilende Plattenpakete (24) werden mit Hilfe einer Vorschubvorrichtung (36) auf den Werkstückauflagetisch (14) von Plattenaufteilsägen aufgeschoben. Dabei verursachen sich auf der Tischauflagefläche (34) ablagernde Staub-und Schmutzpartikel an der unteren Flachseite der untersten Werkstückplatte (24') des Plattenstapels (24) Riefen, die insbesondere bei mit Kunststoff kaschierten Werkstückplatten nicht zu tolerieren sind.

Damit sich eine riefenfreie Positionierung des Plattenstapels (24) auf dem Werkstückauflagetisch (14) erzielen läßt, wird vorgeschlagen, dem Werkstückauflagetisch (14) abgabeseitig wenigstens eine zur Schnittebene (22) parallele, antriebsfreie Werkstückauflagerolle (52', 60) zuzuordnen und für den Vorschub eines Plattenpaketes (24) Werkstückvorschubvorrichtung (36), Werkstückauflagerolle sowie Werkstückauflagetisch (14) zueinander in der Höhe derart verstellbar vorzusehen, daß das Plattenpaket (24) gegebenenfalls zusammen mit einem von diesem abgetrennten Paketteilstück mit dem Werkstückauflagetisch (14) im wesentlichen berührungslos ist.

Fig. 1

## Plattenaufteilsäge

Die Erfindung betrifft eine Plattenaufteilsäge mit den Merkmalen des Oberbegriffes des Patentanspruches 1.

Bei solchen Plattenaufteilsägen (vgl. Prospekt HOLZMA-Plattenschneider HPP 91) befindet sich die Förderebene der Werkstückvorschubvorrichtung in der Ebene der Auflagefläche des Werkstückauflagetisches.

Aus dieser Zuordnung resultiert der gravierende Nachteil, daß die unten liegende Flachseite der untersten Werkstückplatte eines zur Durchführung des Vorschubes in der Spannzange der Werkstückvorschubvorrichtung gespannten Plattenpaketes bei dessen Aufschieben auf den Werkstückauflagetisch durch sich auf dessen Auflagefläche unvermeidlich ablagernde Staub- und Schmutzpartikel zerkratzt wird.

Sofern es sich hierbei um mit Kunststoff beschichtete Werkstückplatten handelt, fallen dabei auch entstehende feinste Riefen störend ins Auge. Aufgrund solcher Oberflächenbeschädigungen sind deshalb häufig die unteren Plattenteile eines aufgeteilten Plattenpaketes nicht verwendbar.

Der Erfindung liegt deshalb die Aufgabe zugrunde, eine Plattenaufteilsäge in einer Ausbildung gemäß dem Oberbegriff des Patentanspruches 1 so zu verbessern, daß mit Sicherheit ein Zerkratzen der auf dem Werkstückauflagetisch zur Auflage kommenden Flachseite der unteren Werkstückplatte eines aufzuteilenden Plattenpaketes vermieden wird.

Diese Aufgabe wird erfindungsgemäß durch die kennzeichnenden Merkmale des Patentanspruches 1 gelöst.

Konstruktiv einfach gestaltet sich hierbei die Erfindung, wenn die Werkstückvorschubvorrichtung zusammen mit der Werkstückauflagerolle zur Durchführung des Vorschubes gemeinsam über die Ebene der Auflagefläche des Werkstückauflagetisches der Plattenaufteilsäge angehoben werden oder zu Beginn eines Aufteilvorganges sich über dieser Ebene befinden. Aufgrund des in wenigstens einer Spannzange festgespannten Plattenstapels wird dieser dann im Verlaufe einer Vorschubbewegung mit seinem freien Stirn ende mit der Tischauflagefläche berührungslos bleiben. Ist der Plattenstapel in Position gebracht, werden Werkstückvorschubvorrichtung und Werkstückauflagerolle zum Auflegen des Plattenstapels auf den Werkstückauflagetisch entsprechend abgesenkt und dieser gespannt. Nach Durchführung eines Trennschnittes und dem Entspannen des Plattenpaketes führen Werkstückvorschubvorrichtung und Werkstückauflagerolle wieder einen Aufwärtshub aus, wobei das vom Plattenpaket abgetrennte Paketteilstück unter Umständen so abkippen wird, daß es mit seiner unteren Trennkante auf der Tischauflagefläche zur Auflage kommt.

Bei der sich anschließenden Vorschubbewegung wird dann das angefallene Paketteilstück durch das restliche Plattenpaket von der Tischauflagefläche heruntergeschoben, wobei durch die auf dieser aufruhende, untere Trennkante desselben etwa auf dieser abgelagerte Schmutzpartikel zugleich heruntergeschoben werden. Nach dem erneuten Positionieren werden dann Werkstückvorschubvorrichtung und Werkstückauflagerolle wiederum abgesenkt und das erläuterte Arbeitsspiel beginnt von Neuem.

Es ist aber auch möglich, zur Durchführung des anfänglichen Vorschubschrittes lediglich die Werkstückvorschubvorrichtung in eine Lage oberhalb der Tischauflagefläche zu steuern und die Werkstückauflagerolle zunächst in der abgesenkten Stellung zu belassen.

Eine weitere konstruktive Vereinfachung der Erfindung ist Gegenstand des Patentanspruches 3. Diese Konstruktion er möglicht es, den Rollentisch, bezogen auf die Tischauflagefläche, stationär so anzuordnen, daß sich dessen Förderebene in der Ebene der Tischauflagefläche befindet.

Weitere Merkmale und Einzelheiten der Erfindung sind in der sich anschließenden Beschreibung eines Ausführungsbeispiels einer erfindungsgemäßen Plattenaufteilsäge erläutert.

In der Zeichnung zeigen in schematischer Darstellung:

Fig. 1 eine Seitenansicht der Plattenaufteilsäge, deren Werkstückvorschubvorrichtung sich in Ausgangsstellung befindet,

Fig. 2 eine verkürzte Darstellung gemäß Fig. 1 zur Veranschaulichung der Lage eines Plattenpakets beim Einschub in die Plattenaufteilsäge,

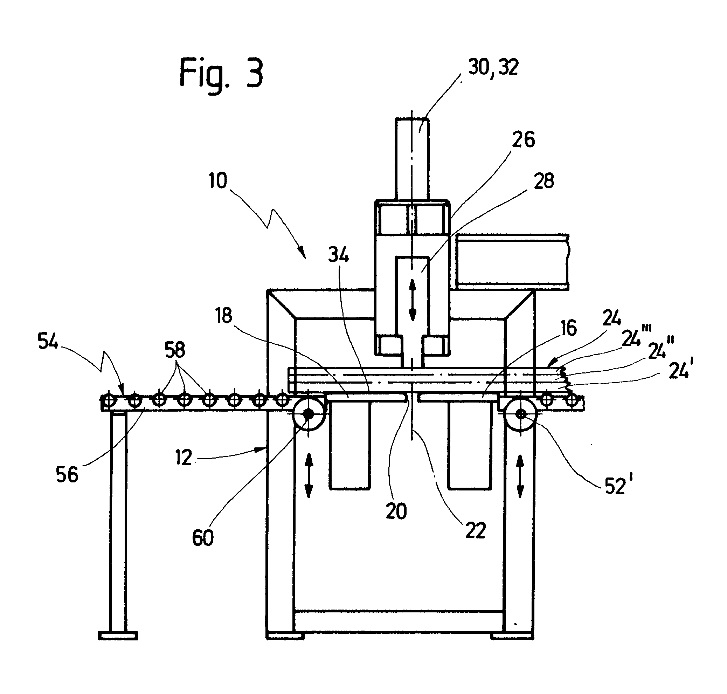

Fig. 3 eine Darstellung ahnlich wie Fig. 2, wobei das Plattenpaket in Sägeposition gezeigt ist und

Fig. 4 eine Draufsicht der Plattenaufteilsäge.

Die als Ganzes mit 10 bezeichnete Plattenaufteilsäge weist einen von einem Maschinengestell 12 gehaltenen Werkstückauflagetisch 14 auf, der zwei Auflageplatten 16 und 18 aufweist, die sich, senkrecht zur Zeichenebene, horizontal erstrecken und zwischen sich einen Sägeschlitz 20 definieren.

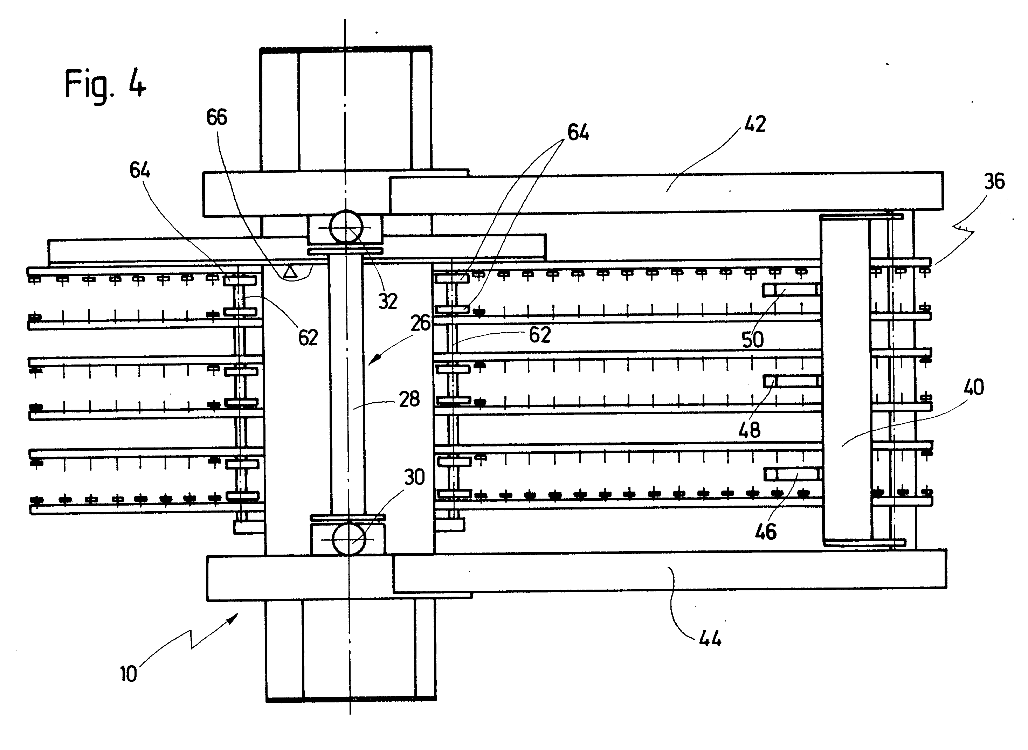

Dem Werkstückauflagetisch 14 ist ein unter Tisch fahrendes Sägeaggregat zugeordnet, das der Einfachheit halber nicht dargestellt ist. Dieses weist vorzugsweise zwei Kreissägeblätter auf, die hintereinander in einer gemeinsamen Schnittebene 22 angeordnet sind, von denen das eine ein Vorritzsägeblatt bildet. Diese Kreissägeblätter tauchen zur Durchführung eines Trennschnittes nach oben aus dem Sägeschlitz 20 aus. Zur Durchführung von Trennschnitten zum Aufteilen eines Plattenpaketes 24 ist oberhalb des Sägeschlitzes 20 eine als Ganzes mit 26 bezeichnete Werkstückspannvorrichtung vorgesehen, die einen sich in Richtung des Sägeschlitzes 20 erstreckenden Druckbalken 28 aufweist, der beispielsweise mittels pneumatisch betätigbaren Hubzylindern 30, 32 (Fig. 4) auf das Plattenpaket zum Festlegen desselben auf einer Tischauflagefläche 34 absenkbar ist.

Der Plattenaufteilsäge 10 ist eingabeseitig eine als Ganzes mit 36 bezeichneter Werkstückvorschubvorrichtung zugeordnet, die einen Rollentisch 38 und oberhalb des Rollentisches 38 einen Paketschieber 40 aufweist, der zwischen Führungswangen 42 und 44 in Richtung auf den Sägeschlitz 20 programmgesteuert verstellbar ist. Er ist beispielsweise mit drei Spannzangen 46, 48, 50 ausgestattet, die das auf den Rollentisch 38 aufzulegende, aufzuteilende Plattenpaket 24 an dessen hinterem Stirnende erfassen und zusammenspannen.

Mit Hilfe derselben sind damit die einzelnen aufeinander liegenden Werkstückplatten 24', 24" und 24''' zueinander kantenbündig festgelegt.

Der Rollentisch 38 weist eine Vielzahl von mit ihrer Achse zum Sägeschlitz 20 parallel und in einer gemeinsamen Horizontalebene a-a gelagerten Tischrollen 52 auf, die antriebslos sind.

Der Plattenaufteilsäge 10 ist abgabeseitig eine als Ganzes mit 54 bezeichnete Übernahmevorrichtung zugeordnet, die, analog zur Werkstückvorschubvorrichtung 36, einen Rollentisch 56 aufweist, .dessen Tischrollen 58 gleichfalls in der Horizontalebene a-a gelagert sind, so dass diese, zusammen mit den Tischrollen 52, eine sich in der Ebene a-a der Tischauflagefläche 34 befindende Paket bzw. Paketteilstückauflage definieren.

Die im vorstehenden Umfange beschriebene Konstruktion ist an sich bekannt und bildet keinen Teil der Erfindung.

Neu ist, daß die der Auflageplatte 18 benachbarte Tischrolle eine relativ zum Werkstückauflagetisch 14 anheb- und absenkbare Werkstückauflagerolle 60 bildet, deren Durchmesser vorzugsweise um ein Vielfaches größer ist als derjenige der Tischrollen 58. Das Anheben dieser Werkstückauflagerolle 60 über die Horizontalebene a-a hinaus erfolgt programmgesteuert mittels einer der Einfachheit halber nicht dargestellten, beispielsweise pneumatisch betätigten Hubvorrichtung.

In der gleichen Weise ist die der Auflageplatte 16 benachbarte Tischrolle 52' des Rollentisches 38 der Werkstückvorschubvorrichtung 36 programmgesteuert anheb- und absenkbar, wobei der Hub beider Rollen 52', 60 ggf. durch eine gemeinsame Hubvorrichtung ausgeführt werden kann.

Wie aus Fig. 4 ersichtlich ist, sind diese beiden Rollen 52', 60 jeweils durch eine Vielzahl von im Achsabstand nebeneinander auf einer Achse drehbar oder auf einer Trägerwelle 62 drehfest angeordnete Rollenscheiben 64 gebildet.

Die beschriebene Plattenaufteilsäge 10 arbeitet folgendermaßen:

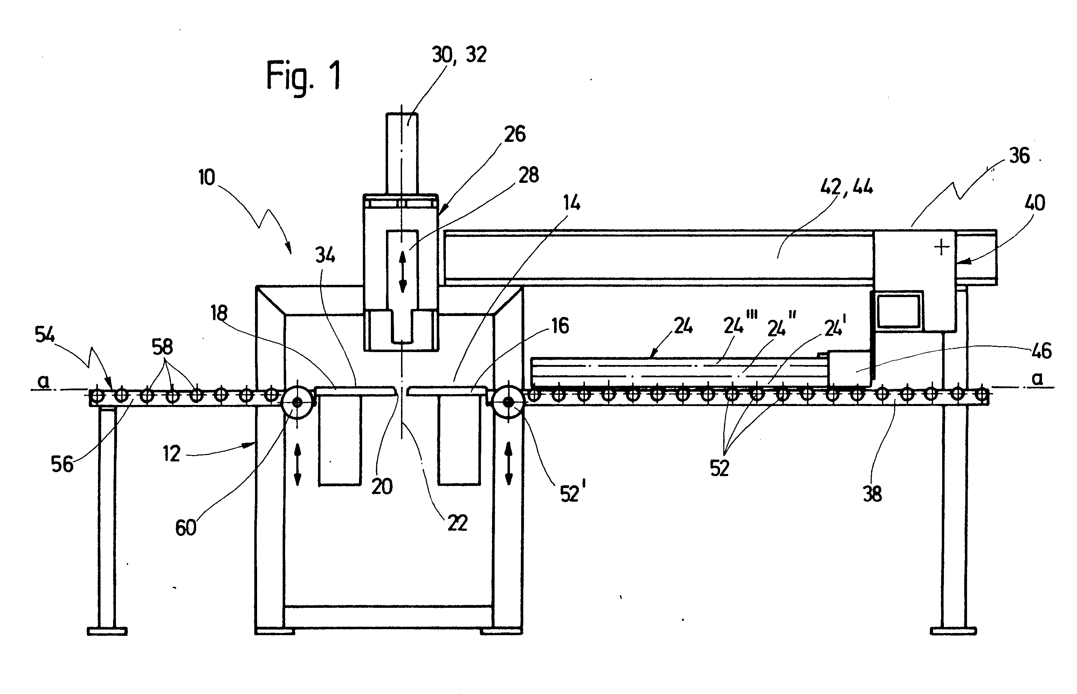

Das Plattenpaket 24 wird beispielsweise durch eine Übergabevorrichtung dem Rollentisch 38 der Werkstückvorschubvorrichtung 36 übergeben und beispielsweise gleichzeitig an einem Seitenanschlag 66 ausgerichtet. (Fig. 4) Danach treten die Spannzangen 46, 48, 50 in Funktion und spannen die aufeinander geschichteten Werkstückplatten 24' 24", 24'''.Der Paketschieber 40 der Werkstückvorschubvorrichtung 36 fährt dann beispielsweise in eine hintere, in Fig. 1 gezeigte Ausgangsposition zurück, wonach das Arbeitsspiel beginnt.

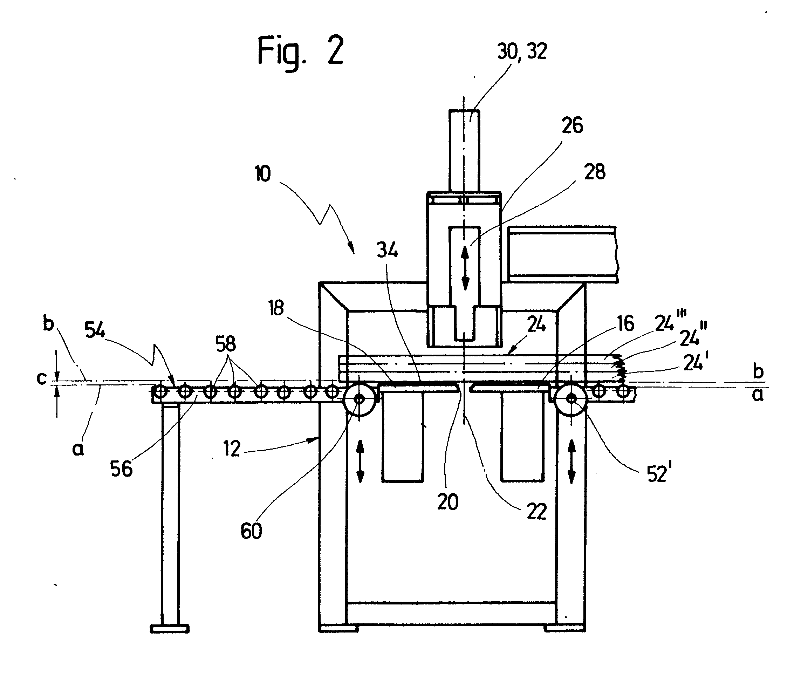

Um zu vermeiden, daß im Verlaufe der einzelnen Vorschubschritte die Unterseite der unteren, beispielsweise mit Kunststoff kaschierten Werkstückplatte 24', durch auf der Tischauflagefläche 34 vorhandene Schmutzpartikel nicht durch Riefenbildung beschädigt werden kann, werden vor Durchführung des ersten Vorschubschrittes die Tischrolle 52' sowie die Werkstückauflagerolle 60, gemäß Fig. 2, in eine Position angehoben, in der sie eine Auflageebene b-b definieren, die sich in einem Abstand c-c oberhalb der Horizontalebene a-a befindet. Das Plattenpaket 24 wird also mit seiner unteren Werkstückplatte 24' zunächst auf die Tischrolle 52' auflaufen und dadurch um einen geringfügigen Betrag schräg gestellt oder, sofern die Spannzangen 46, 48, 50 am Paketschieber 40 höhenverstellbar schwimmend gelagert sind, sich parallel zu sich selbst um den Betrag c angehoben. Nach Beendigung des ersten Vorschubschrittes wird dann das Plattenpaket 24, wie in Fig .2 gezeigt, auf beiden Rollen 52', 60 aufruhen, wonach diese zum Festlegen desselben auf der Tischauflagefläche 34 wieder in ihre Ausgangsstellung abgesenkt werden. Dabei kommt das Plattenpaket 24 auf der Tischauflagefläche 34 zur Auflage und wird mit Hilfe des Druckbalkens 28 der Werkstückspannvorrichtung 26 auf dem Werkstückauflagetisch 14 zur Durchführung des ersten Trennschnittes festgelegt. Ist dieser erfolgt, werden die beiden Rollen 52', 60 wiederum in die Ebene b-b angehoben, wonach das Plattenpaket 24 erneut in Vorschubrichtung mittels der Werkstückvorschubvorrichtung 36 verschoben werden kann. Dabei wird das zuvor von diesem abgetrennte Paketteilstück auf den Rollentisch 56 aufgeschoben.

Alternativ zur erläuterten Arbeitsweise können auch beide Rollentische 38, 56 relativ zum Werkstückauflagetisch 14 in die Ebene b-b anhebbar sein. Außerdem kann der Werkstückauflagetisch 14 relativ zu den Rollentischen 38, 56 im Maschinengestell 12 absenkbar vorgesehen sein. Schließlich können bei Einsatz der beiden höhenverstellbaren Rollen 52′, 60 die Werkstückvorschubvorrichtung 36 sowie die Übernahmevorrichtung 54 anstelle der Rollentische 38, 56 auch andere geeignete Aufnahmevorrichtungen für das Plattenpaket 24 bzw. anfallende Paketteilstücke aufweisen.

Sofern die Spannzangen 46, 48 and 50 am Paketschieber 40 in der Höhe schwimmend verschiebbar gelagert sind, ist es auch möglich, zur Durchführung eines Vorschubes sowohl den Rollentisch 38 als auch die Werkstückauflagerolle 60 gemeinsam in die Ebene b-b anzuheben und nach erfolgtem Vorschub wieder abzusenken.

## Ansprüche

1. Plattenaufteilsäge mit einem einen Sägeschlitz aufweisenden Werkstückauflagetisch, einem unter Tisch fahrenden Sägeaggregat, einer oberhalb des Werkstückauflagetisches angeordneten Werkstückspannvorrichtung und einer dem Werkstückauflagetisch eingabeseitig zugeordneten Werkstückvorschubvorrichtung mit einem zur Schnittebene insbesondere parallele Rollen aufweisenden Rollentisch und wenigstens einer über letzterem angeordneten und senkrecht zur Schnittebene bewegbaren Spannzange für ein aufzuteilendes Plattenpaket,
**dadurch gekennzeichnet,**
dass dem Werkstückauflagetisch (14) abgabeseitig wenigstens eine zur Schnittebene (22) parallele, antriebsfreie Werkstückauflagerolle (60) zugeordnet ist, und dass für den Vorschub eines Plattenpakets (24) Werkstückvorschubvorrichtung (36), Werkstückauflagerolle (60) sowie Werkstückauflagetisch (14) zueinander in der Höhe derart verstellbar sind, dass das Plattenpaket (24), gegebenenfalls zusammen mit einem von diesem abgetrennten Plattenteilstück, mit dem Werkstückauflagetisch (14) im wesentlichen berührungslos ist.

2. Plattenaufteilsäge nach Anspruch 1, dadurch gekennzeichnet, daß Werkstückvorschubvorrichtung (36) und Werkstückauflagerolle (60) gemeinsam relativ zum Werkstückauflagetisch (14) verstellbar sind.

3. Plattenaufteilsäge nach Anspruch 1 oder 2, dadurch gekennzeichnet, daß eine dem Werkstückauflagetisch (14) benachbarte Rolle (52′) des Rollentisches (38) der Werkstückvorschubvorrichtung (36) zusammen mit der Werkstückauflagerolle (60) relativ zum Werkstückauflagetisch (14) anheb- und absenkbar ist.

Fig. 1

# Fig. 2

EP 0 361 126 A1

Fig. 3

Fig. 4

| | EINSCHLÄGIGE DOKUMENTE | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl ) 5 |
| X | EP - A1 - 0 017 166 (MEYER & SCHWABEDISSEN) * Gesamt * ____ | 1 | B 27 B 5/06 |

|  |  |
|---|---|
|  | RECHERCHIERTE SACHGEBIETE (Int. Cl.4) |
|  | B 27 B 5/00 B 65 G |

Der vorliegende Recherchenbericht wurde für alle Patentansprüche erstellt.

| Recherchenort | Abschlußdatum der Recherche | Prüfer |
|---|---|---|
| WIEN | 29-12-1989 | TRATTNER |

KATEGORIE DER GENANNTEN DOKUMENTEN
X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82